# EUROPÄISCHE PATENTSCHRIFT

(11) **EP 3 100 338 B1**
(45) Veröffentlichungstag und Bekanntmachung des Hinweises auf die Patenterteilung: **08.07.2020**
(21) Anmeldenummer: 15710757.4
(22) Anmeldetag: 13.03.2015
(51) Int. Cl.: H02K 1/14, H02K 1/16, H02K 1/18, H02K 3/38, H02K 15/00, H02K 15/12

(54) **ZUSAMMENGESETZTE ELEKTRISCHE MASCHINE**
COMPOSITE ELECTRIC MACHINE
MACHINE ÉLECTRIQUE COMPOSÉE

(30) Priorität: 28.03.2014 EP 14162315
(43) Veröffentlichungstag der Anmeldung: 07.12.2016
(73) Patentinhaber: Siemens Aktiengesellschaft, 80333 München (DE)
(72) Erfinder: HARTMANN, Ulrich, 14197 Berlin (DE); KÜMMLEE, Horst, 13505 Berlin (DE); MÖHLE, Axel, 12163 Berlin (DE); PETEREIT, Peter, 12555 Berlin (DE); RAKOWICZ, Marian, 14621 Schönwalde-Glien (DE); TISCHLER, Kurt, 91052 Erlangen (DE)
(86) Internationale Anmeldenummer: PCT/EP2015/055333
(87) Internationale Veröffentlichungsnummer: WO 2015/144463

(56) Entgegenhaltungen:
- EP-A1- 2 166 644
- WO-A2-2011/006809
- DE-A1- 10 306 147
- DE-A1- 10 318 816
- DE-A1-102009 030 727
- DE-A1-102011 088 660
- DE-A1-102012 202 735
- US-A1- 2012 133 142
- US-A1- 2012 286 593
- US-A1- 2012 319 512

## Beschreibung

Die Erfindung betrifft ein Verfahren zum Herstellen eines ringförmigen Aktivteils einer elektrischen Maschine für einen Mühlenantrieb oder für eine Windkraftanlage, wobei das Aktivteil ringsegmentförmige Sektionen mit Nuten zur Aufnahme von elektrischen Leitern aufweist. Weiterhin betrifft die Erfindung eine derartige ringsegmentförmige Sektion, eine elektrische Maschine für einen Mühlenantrieb oder für eine Windkraftanlage mit einer derartigen Sektion und eine Mühle oder eine Windkraftanlage mit einer derartigen elektrischen Maschine. Schließlich betrifft die Erfindung ein Serviceverfahren für eine derartige elektrische Maschine oder eine derartige Mühle oder eine derartige Windkraftanlage.

Derartige Vorrichtungen bzw. ein derartiges Verfahren kommen beispielsweise bei vergleichsweise großen elektrischen Maschinen mit elektrischen Leistungen von 1 MW und mehr zum Einsatz. Solche Maschinen können oftmals aufgrund von Logistikrestriktionen nicht mehr als komplette Einheiten transportiert werden, sondern müssen in Segmente unterteilt werden. Erst am Aufstellungsort erfolgt dann der Zusammenbau. Dabei ist ein elektrisches Verbinden der Teilsegmente erforderlich.

Technisch kann das elektrische Verbinden der Teilsegmente beispielsweise durch so genannte Klappspulen bewältigt werden, wo eine oder mehrere Spulen am Aufstellort über Segmentgrenzen eingesetzt, elektrisch angeschlossen und gegebenenfalls isoliert wird bzw. werden. Diese Arbeiten sind sehr zeitintensiv und erhöhen somit die Inbetriebsetzungszeit und -kosten für den Elektromotor erheblich.

Aus der DE 10 2011 088 660 A1 sind eine elektrische Maschine und ein Verfahren zu deren Herstellung bekannt. Die elektrische Maschine umfasst ein Gehäuse, einen im Gehäuse angeordneten Stator und einen innerhalb des Stators angeordneten drehbaren Rotor, wobei das Gehäuse mindestens zwei Gehäusesegmente und der Stator mindestens zwei Statorsegmente umfasst, wobei mittels jeweils zumindest einer mechanisch lösbaren Verbindung jedes der Statorsegmente Vereinzelung an einem der Gehäusesegmente fixierbar ist.

Aus der DE 10 2012 202 735 A1 ist eine dynamoelektrische Maschine mit einem Stator bekannt, der in Umfangsrichtung betrachtet mehrere Segmente aufweist, die zusammengesetzt den Stator ergeben.

Der Erfindung liegt unter anderem die Aufgabe zugrunde, eine kostengünstige Art und Weise bereitzustellen, eine elektrische Maschine für einen Mühlenantrieb oder für eine Windkraftanlage zu montieren, eine auf kostengünstige Art und Weise montierbare elektrische Maschine für einen Mühlenantrieb oder für eine Windkraftanlage bereitzustellen bzw. eine derartige elektrische Maschine auf kostengünstige Art und Weise zu warten oder zu reparieren.

Diese Aufgabe wird durch ein Verfahren gemäß Anspruch 1 zum Herstellen eines ringförmigen Aktivteils einer elektrischen Maschine für einen Mühlenantrieb oder für eine Windkraftanlage, wobei das Aktivteil ringsegmentförmige Sektionen mit Nuten zur Aufnahme von elektrischen Leitern aufweist, durch die folgenden Verfahrensschritte gelöst:
- Ausformen von Sektionen mit den Nuten,
- Ausgestalten von jeweils zumindest zwei, vorzugsweise drei, galvanisch voneinander getrennten elektrischen Leitern, wobei der jeweilige elektrische Leiter derart ausgestaltet wird, dass er in zumindest zwei unterschiedlichen Nuten der jeweiligen Sektion in entgegengesetzten Richtungen verlaufend anordenbar ist,
- Isolieren des jeweiligen elektrischen Leiters mit einer jeweiligen, elektrisch isolierenden Isolierschicht,
- Imprägnieren der jeweiligen Isolierschicht des jeweiligen elektrischen Leiters mit einem Imprägniermittel,
- Einbringen des jeweiligen, isolierten und imprägnierten elektrischen Leiters in die zumindest zwei unterschiedlichen Nuten der jeweiligen Sektion,
- derartiges elektrisches Verbinden des jeweiligen elektrischen Leiters der jeweiligen Sektion mit einer jeweiligen Sektions-Stromschiene vor dem Transport der jeweiligen Sektion, dass die jeweilige Sektion mittels einer geeigneten Beaufschlagung der jeweiligen Sektions-Stromschiene mit elektrischer Spannung betreibbar ist,
- Transportieren der jeweiligen Sektion samt der darin eingebrachten jeweiligen elektrischen Leiter an einen Montage- und/oder Betriebsort der elektrischen Maschine,
- Zusammenbauen des ringförmigen Aktivteils durch Aneinanderfügen von zumindest zwei der Sektionen mit Hilfe zumindest einer jeweiligen Verbindung,
- wobei das ringförmige Aktivteil zumindest zwei, vorzugsweise vier, ringsegmentförmige Segmente aufweist, welche als eine Art Traggerüst fungieren und insgesamt auf Fundamenten gelagert sind,
wobei zumindest zwei der Sektionen während des Zusammenbaus des Aktivteils mittels einer jeweiligen Verbindung mit einem jeweiligen Segment verbunden werden, wobei der jeweilige elektrische Leiter der jeweiligen Sektion während des Zusammenbaus des Aktivteils derart mit einer jeweiligen Segment-Stromschiene elektrisch verbunden wird, dass die elektrischen Leiter des jeweiligen Segmentes mittels einer geeigneten Beaufschlagung der jeweiligen Segment-Stromschiene mit elektrischer Spannung betreibbar sind, und
wobei die jeweilige Sektions-Stromschiene während des Zusammenbaus des Aktivteils mit der jeweiligen Segment-Stromschiene verbunden wird.

Weiterhin wird diese Aufgabe gemäß Anspruch 5 durch ein ringförmiges Aktivteil einer elektrischen Maschine für einen Mühlenantrieb oder für eine Windkraftanlage gelöst, wobei das Aktivteil ringsegmentförmige Sektionen und zumindest zwei, vorzugsweise vier, ringsegmentförmige Segmente aufweist, und wobei jede Sektion aufweist:
- Nuten zur Aufnahme von elektrischen Leitern,
- zumindest zwei, vorzugsweise drei, galvanisch voneinander getrennte elektrische Leiter,
- eine jeweilige, elektrisch isolierende Isolierschicht, welche den jeweiligen elektrischen Leiter elektrisch isoliert,
- eine jeweilige Isolierschicht des jeweiligen elektrischen Leiters mit einem Imprägniermittel imprägniert ist,
   der jeweilige, isolierte und imprägnierte elektrische Leiter in zumindest zwei unterschiedlichen Nuten der jeweiligen Sektion in entgegengesetzten Richtungen verlaufend angeordnet ist,
   die jeweilige Sektions-Stromschiene derart mit dem jeweiligen elektrischen Leiter der jeweiligen Sektion elektrisch verbunden ist, das die jeweilige Sektion mittels einer geeigneten Beaufschlagung der jeweiligen Sektions-Stromschiene mit elektrischer Spannung betreibbar ist, und
- wobei zumindest zwei der Sektionen mittels einer jeweiligen Verbindung mit einem jeweiligen Segment verbunden sind, wobei der jeweilige elektrische Leiter der jeweiligen Sektion derart mit einer jeweiligen Segment-Stromschiene elektrisch verbunden ist, dass die elektrischen Leiter des jeweiligen Segmentes mittels einer geeigneten Beaufschlagung der jeweiligen Segment-Stromschiene mit elektrischer Spannung betreibbar sind, und
   wobei die jeweilige Sektions-Stromschiene mit der jeweiligen Segment-Stromschiene verbunden ist.

Ferner wird die oben genannte Aufgabe gemäß Anspruch 8 durch eine elektrische Maschine mit einem derartigen Aktivteil und eine Mühle oder eine Windkraftanlage gemäß Anspruch 9 mit einer derartigen elektrischen Maschine gelöst. Dabei ist die Mühle vorzugsweise zum Mahlen von gesteinsartigem Schüttgut ausgelegt.

Eine ringsegmentförmige Ausgestaltung eines Bauteils liegt beispielsweise dann vor, wenn die radiale Innenseite des Bauteils näherungsweise einen Ausschnitt einer Innenfläche eines Zylindermantels darstellt bzw. wenn das Bauteil näherungsweise einen Kreisbogen darstellt.

Beispielsweise können die zumindest zwei galvanisch voneinander getrennten elektrischen Leiter jeweils als Litzenwicklung ausgeführt werden. Vorzugsweise sind drei galvanisch voneinander getrennte elektrische Leiter vorgesehen, so dass die jeweilige Sektion bzw. die elektrische Maschine mit drei Phasen u, v und w betrieben werden kann. Der jeweilige elektrische Leiter wird in zumindest zwei unterschiedliche Nuten der jeweiligen Sektion eingebracht, wobei die jeweiligen Nuten vorzugsweise in axialer Richtung verlaufen und der jeweilige elektrische Leiter in axialer Richtung zumindest ein Mal von einer axialen Stirnseite der Sektion bzw. der zusammengebauten elektrischen Maschine zur anderen axialen Stirnseite hin und zumindest ein Mal wieder zurückgeführt wird. Durch einen derartigen jeweiligen elektrischen Leiter wird beim Betrieb der jeweiligen Sektion bzw. der elektrischen Maschine ein Magnetpol gebildet. Denkbar ist dabei auch, dass der jeweilige elektrische Leiter zwei Mal oder mehrmals in axialer Richtung hin und zurück geführt wird.

Noch bevor der jeweilige elektrische Leiter in die jeweiligen Nuten eingebracht wird, wird er mit einer Isolierschicht isoliert, welche den jeweiligen Leiter vorzugsweise abgesehen von zumindest zwei jeweiligen Anschlusspunkten umschließt. Der derart isolierte jeweilige elektrische Leiter bzw. die zugehörige Isolierschicht wird anschließend mit einem Imprägniermittel imprägniert, wobei beispielsweise eine Vakuum-Druck-Imprägnierung (VPI) zum Einsatz kommt. Dann wird der isolierte und imprägnierte jeweilige elektrische Leiter in die entsprechenden Nuten der Sektion eingebracht. Vorzugsweise werden diese Arbeitsschritte alle auf einem Betriebsgelände durchgeführt, beispielsweise einer Fabrik zur Herstellung von elektrischen Motoren oder Generatoren.

Hingegen wird die elektrische Maschine an einem anderen Ort, nämlich dem Montage- und/oder Betriebsort, zusammengebaut und/oder betrieben. Beispielsweise handelt es sich bei der elektrischen Maschine um einen Elektromotor, der insbesondere als Mühlenantrieb dient, oder um einen Generator, der bei einer Windkraftanlage zum Einsatz kommt. Die elektrische Maschine kann dabei vorzugsweise mit einer elektrischen Leistung von mehr als 1 MW, insbesondere mehr als 10 MW betrieben werden, wobei die elektrische Maschine insbesondere einen Luftspaltdurchmesser zwischen einem Stator und einem Rotor von zumindest 1 m, vorzugsweise mehr als 5 oder 10 m, aufweist. Insbesondere derartige elektrische Maschinen können nicht komplett an einem Ort zusammengebaut und erst nach dem kompletten Zusammenbau an ihren jeweiligen Betriebsort transportiert werden.

Nachdem der jeweilige, isolierte und imprägnierte elektrische Leiter in die jeweiligen Nuten der jeweiligen Sektion eingebracht wurde, wird die jeweilige Sektion inklusive der darin befindlichen elektrischen Leiter an den Montageort bzw. Betriebsort der elektrischen Maschine transportiert. Für das Beispiel von Mühlen sind der Montageort und der Betriebsort in der Regel derselbe Ort, wobei insbesondere bei Windkraftgeneratoren denkbar ist, dass der Betriebsort in der Gondel der jeweiligen Windkraftanlage ist und der Windkraftgenerator insbesondere am Boden in der Nähe der Windkraftanlage zusammengebaut wird.

Der Zusammenbau des ringförmigen Aktivteils erfolgt dabei schließlich durch Aneinanderfügen von zumindest zwei der Sektionen mithilfe zumindest einer jeweiligen Verbindung. Prinzipiell ist dabei denkbar, dass zwei benachbarte Sektionen mittels der Verbindung direkt miteinander verbunden werden. Alternativ oder zusätzlich können zumindest zwei der Sektionen über ein Traggerüst des Aktivteils oder der elektrischen Maschine derart aneinander gefügt werden, dass die jeweilige Sektion mit dem Traggerüst mittels einer jeweiligen Verbindung verbunden wird, wodurch das ringförmige Aktivteil gebildet wird, bei welchem die Sektionen letztendlich ebenfalls aneinandergefügt sind. Vorzugsweise ist die jeweilige Verbindung mechanisch lösbar, insbesondere als Schraubverbindung, ausgeführt.

Das vorgeschlagene Verfahren bzw. die vorgeschlagene ringsegmentförmige Sektion erlaubt, die jeweilige Sektion in der Fertigungsstätte bereits komplett herzustellen, zu isolieren, zu imprägnieren und elektrisch zu prüfen. Dies bietet beispielsweise den Vorteil, dass insbesondere die Arbeitsschritte der Isolierung, der Imprägnierung und der Prüfung automatisiert durchgeführt werden können, was hilft, Anschlussfehler und damit einhergehende Probleme mit Überspannung zu vermeiden und zusätzlich Kosten zu sparen. Weiterhin sind die jeweiligen elektrischen Leiter der komplett hergestellten Sektion dank ihrer Isolation und Imprägnierung praktisch in sich geschlossenen und somit besonders gut gegen Verschmutzung und Feuchtigkeit geschützt, wodurch Beschädigungen während des Transportes zum Montage- und/oder Betriebsort der elektrischen Maschine verringert oder vermieden werden können. Zusätzlich ist der Montageaufwand der elektrischen Maschine am Montage- bzw. Aufstellort und somit üblicherweise am Betriebsort der elektrischen Maschine deutlich reduziert. Hinzu kommt, dass der Anteil der Gleichteile einer elektrischen Maschine erhöht werden kann, wenn das Wicklungssystem in eine größere Zahl von Sektionen unterteilt wird. Dies verringert insbesondere bei großen Elektromotoren oder -generatoren mit Luftspaltdurchmessern von mehreren Metern die Durchlaufzeit zwischen Auftragseingang und Inbetriebsetzung der Maschine, wodurch wiederum Kosten reduziert werden können.

Ebenfalls ist das Risiko einer fehlerhaften Ausführung am Wicklungssystem, zum Beispiel durch Montage- oder Isolationsfehler oder dergleichen, dank des vorgeschlagenen Verfahrens bzw. der vorgeschlagenen Sektion deutlich reduziert.

Dabei wird der jeweilige elektrische Leiter der jeweiligen Sektion vor dem Transport der jeweiligen Sektion oder während des Zusammenbaus des Aktivteils derart mit einer jeweiligen Sektions-Stromschiene elektrisch verbunden, dass die jeweilige Sektion mittels einer geeigneten Beaufschlagung der jeweiligen Sektions-Stromschiene mit elektrischer Spannung betreibbar ist.

Die jeweilige Sektions-Stromschiene kann beispielsweise als Kupfer- oder Stahlteil mit einem insbesondere rechteckigen Querschnitt ausgeführt sein, wobei auch eine Ausführung als Kabel oder isoliertes Kabel denkbar ist. Durch den Begriff der Stromschiene soll im vorliegenden Dokument zum Ausdruck gebracht werden, dass keine individuelle elektrische Verbindung lediglich zwischen zwei einzelnen elektrischen Leitern oder Teilleitern vorgenommen werden soll, beispielsweise wie bei einer Realisierung einer Reihenschaltung von zwei elektrischen Leitern bzw. Teilleitern.

Der jeweilige elektrische Leiter wird noch vor dem Transport der jeweiligen Sektion mit der jeweiligen Sektions-Stromschiene elektrisch verbunden, wodurch der Montageaufwand am Montage- und/oder Betriebsort der elektrischen Maschine reduziert werden kann. Dadurch können wiederum Kosten eingespart und Fehler bei den elektrischen Anschlüssen vermieden werden. Durch die Verwendung der oben erläuterten Stromschienen ist der Montageaufwand, insbesondere verglichen mit einem einzelnen Verbinden der einzelnen elektrischen Leiter bzw. Teilleiter, vergleichsweise gering.

Die jeweiligen elektrischen Leiter und jeweiligen Sektions-Stromschienen sind somit derart ausgeführt bzw. miteinander verbunden, dass die jeweilige Sektion durch eine geeignete Beaufschlagung der jeweiligen Sektions-Stromschiene betreibbar ist. Dies erlaubt, das Aktivteil modular aufzubauen, wodurch beispielsweise auch ein Teillastbetrieb, bei welchem lediglich ein Teil der Sektionen betrieben werden, ermöglicht wird.

Bei einer vorteilhaften Ausgestaltung der Erfindung wird dabei die jeweilige Sektions-Stromschiene während des Zusammenbaus des Aktivteils direkt mit dem jeweiligen Anschlusspunkt der elektrischen Maschine verbunden.

Beispielsweise wird unter dem jeweiligen Anschlusspunkt der elektrischen Maschine eine jeweilige Kontaktstelle in einem Klemmenkasten der elektrischen Maschine verstanden, welcher beispielsweise mit dem öffentlichen Stromnetz oder einem Umrichter verbunden ist. Somit wird über den jeweiligen Anschlusspunkt elektrische Energie der elektrischen Maschine zugeführt bzw. von der elektrischen Maschine abgeführt, falls die elektrische Maschine motorisch bzw. generatorisch betrieben wird.

Das direkte Verbinden der jeweiligen Sektions-Stromschiene mit dem jeweiligen Anschlusspunkt bietet den Vorteil, dass der Montageaufwand am Montage- und/oder Betriebsort sehr gering ist. Des Weiteren bietet das direkte Verbinden den zusätzlichen Vorteil, dass ein Teillastbetrieb der jeweiligen Sektion bzw. der elektrischen Maschine ermöglicht wird, weil die jeweiligen Sektionen der elektrischen Maschine unabhängig voneinander betreibbar sind. Der ermöglichte Teillastbetrieb erlaubt eine vergleichsweise hohe Verfügbarkeit, welche insbesondere bei Mühlen von herausragender Wichtigkeit ist.

Ein derartiger Teillastbetrieb ist beispielsweise wünschenswert, wenn zumindest eine der Sektionen der elektrischen Maschine defekt ist bzw. keine elektrische Energie zu- bzw. abführbar ist. Der letztgenannte Fall liegt beispielsweise dann vor, wenn verschiedene Sektionen der elektrischen Maschine an verschiedenen Umrichter angeschlossen sind und einer der Umrichter defekt ist, so dass die an den defekten Umrichter angeschlossene Sektion bzw. angeschlossenen Sektionen nicht betrieben werden kann bzw. können.

Bei einer weiteren vorteilhaften Ausgestaltung der Erfindung weist das ringförmige Aktivteil zumindest zwei, vorzugsweise vier, ringsegmentförmige Segmente auf, wobei zumindest zwei der Sektionen während des Zusammenbaus des Aktivteils mittels einer jeweiligen Verbindung mit einem jeweiligen Segment verbunden werden.

Die Gesamtheit der Segmente kann beispielsweise als das oben erläuterte Traggerüst verstanden werden. Während des Zusammenbaus des Aktivteils werden beispielsweise zunächst alle Segmente des Aktivteils zusammengesetzt und insbesondere mittels Verbindungen miteinander verbunden. Anschließend können die jeweiligen Sektionen mit dem jeweiligen Segment mittels einer jeweiligen Verbindung verbunden werden.

Die Segmente sind jeweils mit zumindest zwei Sektionen mittels einer jeweiligen Verbindung verbunden, wobei vorzugsweise drei oder mehr Sektionen pro Segment vorgesehen sind. Dank der Segmente und der jeweiligen Verbindung der jeweiligen Sektion mit einem jeweiligen Segment wird der Zusammenbau des Aktivteils am Montage- und/oder Betriebsort der elektrischen Maschine weiter vereinfacht. Hinzu kommt, dass diese Ausführung der elektrischen Maschine einen Austausch einer defekten Sektion besonders einfach gestaltet. Vorzugsweise ist die jeweilige Verbindung mechanisch lösbar ausgeführt.

Bei einer weiteren vorteilhaften Ausgestaltung der Erfindung wird dabei der jeweilige elektrische Leiter der jeweiligen Sektion während des Zusammenbaus des Aktivteils derart mit einer jeweiligen Segment-Stromschiene elektrisch verbunden, dass die elektrischen Leiter des jeweiligen Segmentes mittels einer geeigneten Beaufschlagung der jeweiligen Segment-Stromschiene mit elektrischer Spannung betreibbar sind.

Durch die Verwendung einer jeweiligen Segment-Stromschiene kann der Montageaufwand am Montage- und oder Betriebsort der elektrischen Maschine vergleichsweise gering gehalten werden, wobei dennoch eine vergleichsweise einfache elektrische Schaltung des gesamten Aktivteils erreichbar ist.

Bei einer weiteren vorteilhaften Ausgestaltung der Erfindung wird dabei während des Zusammenbaus die jeweilige Sektions-Stromschiene mit der jeweiligen Segment-Stromschiene verbunden.

Vorzugsweise wird die jeweilige Sektions-Stromschiene mit der jeweiligen Segment-Stromschiene mittels einer jeweiligen, insbesondere mechanisch lösbaren, Verbindung verbunden. Dies stellt einen vergleichsweise geringen Montageaufwand dar und erlaubt gleichzeitig eine einfache Reparatur bzw. einen einfachen Austausch insbesondere einer defekten Sektion.

Bei einer alternativen vorteilhaften Ausgestaltung der Erfindung ist dabei die jeweilige Sektions-Stromschiene einstückig mit der jeweiligen Segment-Stromschiene ausgeführt.

Eine derartige Ausführung der jeweiligen Segment-Stromschiene bzw. der jeweiligen Sektions-Stromschiene vereinfacht die Montage und reduziert somit die Kosten bei der Inbetriebsetzung, wobei zusätzlich eine Reparatur bzw. ein Austausch insbesondere einer defekten Sektion erleichtert wird.

Bei einer weiteren vorteilhaften Ausgestaltung der Erfindung wird die jeweilige Segment-Stromschiene während des Zusammenbaus direkt mit dem jeweiligen Anschlusspunkt der elektrischen Maschine verbunden.

Dies erlaubt, das Aktivteil modular aufzubauen, wodurch beispielsweise auch ein Teillastbetrieb, bei welchem lediglich ein Teil der Segmente betrieben werden, ermöglicht wird. Das direkte Verbinden der jeweiligen Segment-Stromschiene mit dem jeweiligen Anschlusspunkt bietet den Vorteil, dass der Montageaufwand am Montage- und/oder Betriebsort sehr gering ist. Des Weiteren bietet das direkte Verbinden den zusätzlichen Vorteil, dass ein Teillastbetrieb des jeweiligen Segmentes bzw. der elektrischen Maschine ermöglicht wird, weil die jeweiligen Segmente der elektrischen Maschine unabhängig voneinander betreibbar sind. Der ermöglichte Teillastbetrieb erlaubt eine vergleichsweise hohe Verfügbarkeit, welche insbesondere bei Mühlen von herausragender Wichtigkeit ist.

Bei einer weiteren vorteilhaften Ausgestaltung der Erfindung werden die jeweiligen elektrischen Leiter von zumindest zwei unterschiedlichen Segmenten während des Zusammenbaus des Aktivteils über die jeweilige Sektions-Stromschiene oder über die jeweilige Segment-Stromschiene miteinander verbunden, wobei die jeweilige Sektions-Stromschiene oder die jeweilige Segment-Stromschiene während des Zusammenbaus mit dem jeweiligen Anschlusspunkt der elektrischen Maschine verbunden wird.

Bei einer weiteren vorteilhaften Ausgestaltung der Erfindung sind die zumindest zwei elektrischen Leiter derart ausgestaltet, dass bei einer geeigneten Beaufschlagung des jeweiligen elektrischen Leiters mit elektrischer Spannung zumindest zwei, vorzugsweise drei, Magnetpole gebildet werden.

Vorzugsweise sind die elektrischen Leiter der jeweiligen Sektion derart ausgestaltet, dass einer entsprechenden Beaufschlagung zumindest zwei, vorzugsweise drei, Magnetpole gebildet werden, welche sich in Umfangsrichtung zueinander versetzt ausbilden. Insbesondere kann die jeweilige Sektion derart ausgebildet sein, dass die jeweilige Sektion jeweils separate elektrische Leiter für die drei Phasen u, v und w aufweist und dass die jeweilige Sektion für jede der drei Phasen bei geeigneter Beaufschlagung mit elektrischer Spannung jeweils zumindest zwei, vorzugsweise drei, Magnetpole ausbildet.

Bei einer weiteren vorteilhaften Ausgestaltung der Erfindung ist der jeweilige elektrische Leiter als Formspule ausgebildet, wobei zumindest einer der elektrischen Leiter in radialer Richtung nach außen gekröpft ist und/oder zumindest einer der elektrischen Leiter in radialer Richtung nach innen gekröpft ist.

Durch eine derartige Kröpfung des jeweiligen elektrischen Leiters wird eine vergleichsweise kompakte axiale Ausgestaltung der jeweiligen Sektion und somit des ringförmigen Aktivteils ermöglicht. Insbesondere kann vorgesehen sein, dass einer der elektrischen Leiter beispielsweise um 40-45° nach radial außen oder innen gekröpft ist und ein anderer der elektrischen Leiter um 80-90° nach radial außen oder innen gekröpft ist.

Schließlich wird diese Aufgabe durch ein Serviceverfahren gemäß Anspruch 10, aufweisend die folgenden Verfahrensschritte gelöst:
- Bereithalten zumindest einer ringsegmentförmigen Sektion zusätzlich zu den ringsegmentförmigen Sektionen der elektrischen Maschine in der Umgebung des Betriebsortes der elektrischen Maschine,
   wobei die zumindest eine, zusätzlich bereitgehaltene Sektion im Wesentlichen baugleich mit den ringsegmentförmigen Sektionen der elektrischen Maschine ist,
   falls eine der ringsegmentförmigen Sektionen der elektrischen Maschine einen Defekt aufweist:
   - Ausbauen der defekten Sektion aus der elektrischen Maschine und
   - Einbauen der zumindest einen, zusätzlich bereitgehaltenen Sektion in die elektrische Maschine.

Dank der jeweiligen Verbindung der jeweiligen Sektion mit dem restlichen Aktivteil bzw. der restlichen elektrischen Maschine kann eine defekte Sektion sehr einfach ausgebaut werden. Vorzugsweise ist hierzu auch die jeweilige Stromschiene mittels einer Verbindung mit dem jeweiligen elektrischen Leiter der betroffenen Sektion verbunden. Vorzugsweise ist die jeweilige Verbindung mechanisch lösbar ausgeführt.

Vorzugsweise weist das Aktivteil der elektrischen Maschine zumindest zwölf Sektionen auf, welche sich insbesondere auf vier Segmente verteilen, so dass die einzelnen Sektionen im Vergleich zur gesamten elektrischen Maschine vergleichsweise klein sind. Zum einen sinken durch vergleichsweise kleine Sektionen die Herstellungskosten der einzelnen Sektion und zum anderen ist der Kapitaleinsatz zur Bevorratung einer zusätzlichen Sektion geringer.

Die zusätzliche Sektion wird dabei in der Umgebung des Betriebsortes der elektrischen Maschine bereitgehalten, wobei die Umgebung insbesondere innerhalb einer Maschinenhalle oder eines Betriebsgeländes der elektrischen Maschine gegeben ist, in bzw. auf welchem die elektrischen Maschine betrieben wird. Für das Beispiel eines Windparks mit mehreren Windkraftanlagen kann die genannte Umgebung etwas größer ausfallen und beispielsweise eine zentrale Umrichterstation des Windparks umfassen, so dass die zusätzliche Sektion beispielsweise bei der zentralen Umrichterstation untergebracht wird.

Im Folgenden wird die Erfindung anhand der in den Figuren dargestellten Ausführungsbeispiele näher beschrieben und erläutert. Es zeigen:
- FIG 1: ein Beispiel einer ringsegmentförmigen Sektion,
- FIG 2: ein Ausführungsbeispiel einer erfindungsgemäßen ringsegmentförmigen Sektion, und
- FIG 3: ein Ausführungsbeispiel einer erfindungsgemäßen elektrischen Maschine.

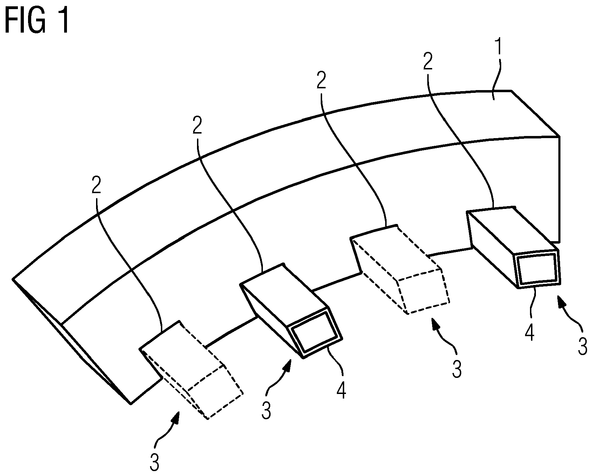

Figur 1 zeigt ein Beispiel einer ringsegmentförmigen Sektion 1. Die Sektion 1 weist mehrere Nuten 2 auf, in welchen elektrische Leiter 3 angeordnet sind, welche von einander galvanisch getrennt sind. In gestrichelten bzw. durchgezogenen Linien ist dabei ein erster bzw. zweiter elektrischer Leiter 3 dargestellt, welcher jeweils in zwei unterschiedlichen Nuten 2 in entgegengesetzten Richtungen verlaufend angeordnet ist. Der jeweilige elektrische Leiter 3 ist dabei mittels einer elektrisch isolierenden Isolierschicht 4 elektrisch isoliert, wobei die jeweilige Isolierschicht 4 mit einem Imprägniermittel imprägniert ist. Die Isolierung und Imprägnierung des jeweiligen elektrischen Leiters 3 wird dabei vorgenommen, noch bevor der jeweilige elektrische Leiter 3 in die jeweilige Nut 2 eingebracht wird.

Mehrere solcher Sektionen 1 samt der darin eingebrachten jeweiligen elektrischen Leiter 3 können an einen Montage- und/oder Betriebsort einer elektrischen Maschine transportiert werden, um schließlich durch Aneinanderfügen mehrerer Sektionen 1 mithilfe einer jeweiligen Verbindung zu einem ringförmigen Aktivteil der elektrischen Maschine zusammengebaut zu werden.

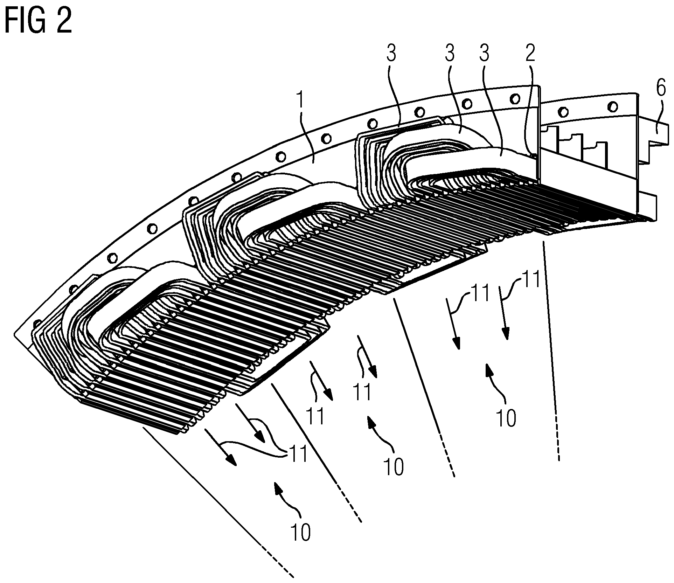

Figur 2 zeigt ein Ausführungsbeispiel einer erfindungsgemäßen ringsegmentförmigen Sektion 1. Gleiche Bezugszeichen wie in Figur 1 bezeichnen dabei gleiche Gegenstände.

Die Sektion 1 mit ihren elektrischen Leitern 3 ist derart ausgestaltet, dass bei einer geeigneten Beaufschlagung der elektrischen Leiter 3 mit elektrischer Spannung drei Magnetpole 10 gebildet werden können, so dass beispielsweise wie in Figur 2 dargestellt, Magnetfeldlinien 11 nach radial innen erzeugt werden. Für jeden Bereich der Sektion 1, welcher einen Magnetpol 10 bilden kann, sind drei elektrische Leiter 3 entsprechend der drei Phasen u, v und w vorgesehen. Dabei ist die Sektion 1 bzw. der elektrische Leiter 3 jeder Phase derart ausgestaltet, dass der jeweilige Leiter 3 in den Nuten 2 dreimal in die eine axiale Richtung und dreimal in die entgegengesetzte Richtung verlaufend angeordnet ist. Weiterhin weisen die elektrischen Leiter 3 von zwei der drei Phasen des jeweiligen Bereichs mit einem Magnetpol 10 eine Kröpfung nach radial außen auf, wobei einer dieser beiden Leiter 3 um etwa 40-45° und der andere dieser beiden Leiter um etwa 80-90° gekröpft ist.

Die elektrischen Leiter 3 sind jeweils mit einer Sektions-Stromschiene 6 verbunden, welche in der Figur 2 lediglich angedeutet ist. Vorzugsweise ist zumindest für jede der drei Phasen u, v und w eine separate Stromschiene 6 vorgesehen. Die jeweilige Sektions-Stromschiene 6 kann beispielsweise mit entsprechenden Sektions-Stromschienen 6 anderer Sektionen 1 und/oder direkt mit den Anschlusspunkten beispielsweise eines Klemmenkastens der elektrischen Maschine verbunden werden. Die jeweilige Verbindung zwischen dem jeweiligen elektrischen Leiter 3 und der jeweiligen Sektions-Stromschiene 6 ist dabei vorzugsweise mechanisch lösbar ausgestaltet.

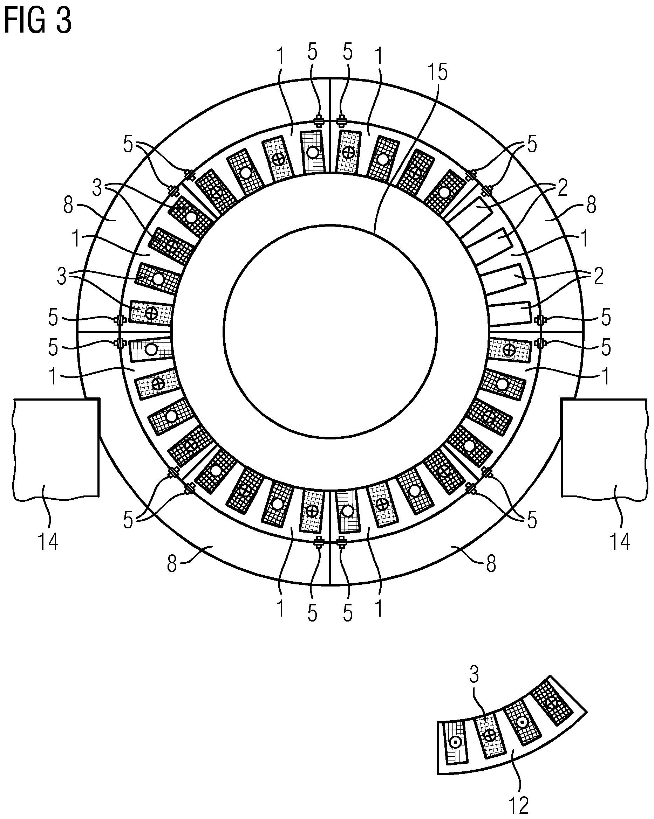

Figur 3 zeigt ein Ausführungsbeispiel einer erfindungsgemäßen elektrischen Maschine, welche beispielsweise als Mühlenantrieb oder als Mühle ausgeführt sein kann. Der Übersichtlichkeit halber wurde bei der Darstellung der elektrischen Maschine auf einige Details verzichtet.

Die elektrische Maschine weist insgesamt vier Segmente 8 auf, welche als eine Art Traggerüst fungieren und insgesamt auf Fundamenten 14 gelagert sind. Jedes der Segmente 8 ist mittels Verbindungen 5 mit zwei Sektionen 1 verbunden. Die Gesamtheit der Sektionen 1 bilden somit ein ringförmiges Aktivteil, wobei die Segmente 8 eine tragende Funktion erfüllen. Innerhalb des Aktivteils ist ein drehbar gelagerter Rotor 15 angeordnet, welcher beispielsweise drehfest mit einer Mahltrommel verbunden ist.

Jede der Sektionen 1 weist eine jeweilige Sektions-Stromschiene 6 auf, die in der Figur 3 nicht näher dargestellt ist. Die jeweilige Sektions-Schiene 6 kann dabei direkt mit einem jeweiligen Anschlusspunkt, beispielsweise in einem Klemmenkasten, der elektrischen Maschine oder anderen Sektion-Stromschienen 6 bzw. Segment-Stromschienen verbunden sein, wozu vorzugsweise jeweilige Verbindungen zum Einsatz kommen.

Zusätzlich zu den Sektionen 1 der elektrischen Maschine wird in der Umgebung des Betriebsorts der elektrischen Maschine eine zusätzliche Sektion 12 bereitgehalten. Für den Fall, dass eine der Sektionen 1 der elektrischen Maschine einen Defekt aufweist, wird die defekte Sektion 1 aus der elektrischen Maschine ausgebaut und die zusätzlich bereitgehaltene Sektion 12 in die elektrische Maschine eingebaut.

Um eine kostengünstige Art und Weise bereitzustellen, eine elektrische Maschine zu montieren, eine auf kostengünstige Art und Weise montierbare elektrische Maschine bereitzustellen bzw. eine derartige elektrische Maschine auf kostengünstige Art und Weise zu warten oder zu reparieren, werden unter anderem die folgenden Verfahrensschritte vorgeschlagen:
- Ausformen von Sektionen mit den Nuten,
- Ausgestalten von jeweils zumindest zwei, vorzugsweise drei, galvanisch voneinander getrennten elektrischen Leitern, wobei der jeweilige elektrische Leiter derart ausgestaltet wird, dass er in zumindest zwei unterschiedlichen Nuten der jeweiligen Sektion in entgegengesetzten Richtungen verlaufend anordenbar ist,
- Isolieren des jeweiligen elektrischen Leiters mit einer jeweiligen, elektrisch isolierenden Isolierschicht,- Imprägnieren der jeweiligen Isolierschicht des jeweiligen elektrischen Leiters mit einem Imprägniermittel,
- Einbringen des jeweiligen, isolierten und imprägnierten elektrischen Leiters in die zumindest zwei unterschiedlichen Nuten der jeweiligen Sektion,
- derartiges elektrisches Verbinden des jeweiligen elektrischen Leiters der jeweiligen Sektion mit einer jeweiligen Sektions-Stromschiene vor dem Transport der jeweiligen Sektion, dass die jeweilige Sektion mittels einer geeigneten Beaufschlagung der jeweiligen Sektions-Stromschiene mit elektrischer Spannung betreibbar ist,
- Transportieren der jeweiligen Sektion samt der darin eingebrachten jeweiligen elektrischen Leiter an einen Montage- und/oder Betriebsort der elektrischen Maschine,
- Zusammenbauen des ringförmigen Aktivteils durch Aneinanderfügen von zumindest zwei der Sektionen mit Hilfe zumindest einer jeweiligen Verbindung.

Weiterhin wird vorgeschlagen, dass die Sektion Nuten zur Aufnahme von elektrischen Leitern, zumindest zwei, vorzugsweise drei, galvanisch voneinander getrennte elektrische Leiter, eine jeweilige, elektrisch isolierende Isolierschicht und eine jeweilige Sektions-Stromschiene aufweist, wobei die jeweilige Isolierschiecht den jeweiligen elektrischen Leiter elektrisch isoliert, wobei die jeweilige Isolierschicht des jeweiligen elektrischen Leiters mit einem Imprägniermittel imprägniert ist, wobei der jeweilige, isolierte und imprägnierte elektrische Leiter in zumindest zwei unterschiedlichen Nuten der jeweiligen Sektion in entgegengesetzten Richtungen verlaufend angeordnet ist, wobei die jeweilige Sektions-Stromschiene derart mit dem jeweiligen elektrischen Leiter der jeweiligen Sektion vor dem Transport der jeweiligen Sektion elektrisch verbunden ist, dass die jeweilige Sektion mittels einer geeigneten Beaufschlagung der jeweiligen Sektions-Stromschiene mit elektrischer Spannung betreibbar ist.

Ferner werden eine elektrische Maschine mit einer derartigen Sektion und eine Mühle mit einer derartigen elektrischen Maschine vorgeschlagen.

Schließlich wird ein Serviceverfahren mit den folgenden Verfahrensschritten vorgeschlagen:
- Bereithalten zumindest einer ringsegmentförmigen Sektion zusätzlich zu den ringsegmentförmigen Sektionen der elektrischen Maschine in der Umgebung des Betriebsortes der elektrischen Maschine,
   wobei die zumindest eine, zusätzlich bereitgehaltene Sektion im Wesentlichen baugleich mit den ringsegmentförmigen Sektionen der elektrischen Maschine ist,
   falls eine der ringsegmentförmigen Sektionen der elektrischen Maschine einen Defekt aufweist:
   - Ausbauen der defekten Sektion aus der elektrischen Maschine und
   - Einbauen der zumindest einen, zusätzlich bereitgehaltenen Sektion in die elektrische Maschine.

## Patentansprüche

1. Verfahren zum Herstellen eines ringförmigen Aktivteils einer elektrischen Maschine für einen Mühlenantrieb oder für eine Windkraftanlage, wobei das Aktivteil ringsegmentförmige Sektionen (1) mit Nuten (2) zur Aufnahme von elektrischen Leitern (3) aufweist,
umfassend die Verfahrensschritte:
- Ausformen von Sektionen (1) mit den Nuten (2),
- Ausgestalten von jeweils zumindest zwei, vorzugsweise drei, galvanisch voneinander getrennten elektrischen Leitern (3), wobei der jeweilige elektrische Leiter (3) derart ausgestaltet wird, dass er in zumindest zwei unterschiedlichen Nuten (2) der jeweiligen Sektion (1) in entgegengesetzten Richtungen verlaufend anordenbar ist,
- Isolieren des jeweiligen elektrischen Leiters (3) mit einer jeweiligen, elektrisch isolierenden Isolierschicht (4),
- Imprägnieren der jeweiligen Isolierschicht (4) des jeweiligen elektrischen Leiters (3) mit einem Imprägniermittel,
- Einbringen des jeweiligen, isolierten und imprägnierten elektrischen Leiters (3) in die zumindest zwei unterschiedlichen Nuten (2) der jeweiligen Sektion (1),
- derartiges elektrisches Verbinden des jeweiligen elektrischen Leiters (3) der jeweiligen Sektion (1) mit einer jeweiligen Sektions-Stromschiene (6) vor dem Transport der jeweiligen Sektion (1), dass die jeweilige Sektion (1) mittels einer geeigneten Beaufschlagung der jeweiligen Sektions-Stromschiene (6) mit elektrischer Spannung betreibbar ist,
- Transportieren der jeweiligen Sektion (1) samt der darin eingebrachten jeweiligen elektrischen Leiter (3) an einen Montage- und/oder Betriebsort der elektrischen Maschine,
- Zusammenbauen des ringförmigen Aktivteils durch Aneinanderfügen von zumindest zwei der Sektionen (1) mit Hilfe zumindest einer jeweiligen Verbindung (5),
- wobei das ringförmige Aktivteil zumindest zwei, vorzugsweise vier, ringsegmentförmige Segmente (8) aufweist, welche als eine Art Traggerüst fungieren und insgesamt auf Fundamenten (14) gelagert sind,
wobei zumindest zwei der Sektionen (1) während des Zusammenbaus des Aktivteils mittels einer jeweiligen Verbindung (5) mit einem jeweiligen Segment (8) verbunden werden,
wobei der jeweilige elektrische Leiter (3) der jeweiligen Sektion (1) während des Zusammenbaus des Aktivteils derart mit einer jeweiligen Segment-Stromschiene elektrisch verbunden wird, dass die elektrischen Leiter (3) des jeweiligen Segmentes (8) mittels einer geeigneten Beaufschlagung der jeweiligen Segment-Stromschiene mit elektrischer Spannung betreibbar sind, und
wobei die jeweilige Sektions-Stromschiene (6) während des Zusammenbaus des Aktivteils mit der jeweiligen Segment-Stromschiene verbunden wird.

2. Verfahren nach einem der Ansprüche 1,
wobei die jeweilige Segment-Stromschiene während des Zusammenbaus direkt mit dem jeweiligen Anschlusspunkt der elektrischen Maschine verbunden wird.

3. Verfahren nach einem der vorhergehenden Ansprüche,
wobei die jeweiligen elektrischen Leiter (3) von zumindest zwei unterschiedlichen Segmenten (8) während des Zusammenbaus des Aktivteils über die jeweilige Sektions-Stromschiene (6) oder über die jeweilige Segment-Stromschiene miteinander verbunden werden,
wobei die jeweilige Sektions-Stromschiene (6) oder die jeweilige Segment-Stromschiene während des Zusammenbaus mit dem jeweiligen Anschlusspunkt der elektrischen Maschine verbunden wird.

4. Verfahren nach einem der vorangehenden Ansprüche, wobei die jeweiligen elektrischen Leiter als Formspule ausgebildet sind und wobei zumindest einer der elektrischen Leiter (3) in radialer Richtung nach außen gekröpft ist und/oder zumindest einer der elektrischen Leiter (3) in radialer Richtung nach innen gekröpft ist.

5. Ringförmiges Aktivteil einer elektrischen Maschine für einen Mühlenantrieb oder für eine Windkraftanlage, wobei das Aktivteil ringsegmentförmige Sektionen (1) und zumindest zwei, vorzugsweise vier, ringsegmentförmige Segmente (8) aufweist, welche als eine Art Traggerüst fungieren und insgesamt auf Fundamenten (14) gelagert sind,
und wobei jede Sektion (1) aufweist:
- Nuten (2) zur Aufnahme von elektrischen Leitern (3),
- zumindest zwei, vorzugsweise drei, galvanisch voneinander getrennte elektrische Leiter (3),
- eine jeweilige, elektrisch isolierende Isolierschicht (4), welche den jeweiligen elektrischen Leiter (3) elektrisch isoliert,
- eine jeweilige Sektions-Stromschiene (6),
wobei die jeweilige Isolierschicht (4) des jeweiligen elektrischen Leiters (3) mit einem Imprägniermittel imprägniert ist,
der jeweilige, isolierte und imprägnierte elektrische Leiter (3) in zumindest zwei unterschiedlichen Nuten (2) der jeweiligen Sektion (1) in entgegengesetzten Richtungen verlaufend angeordnet ist,
die jeweilige Sektions-Stromschiene (6) derart mit dem jeweiligen elektrischen Leiter (3) der jeweiligen Sektion (1) elektrisch verbunden ist, dass die jeweilige Sektion (1) mittels einer geeigneten Beaufschlagung der jeweiligen Sektions-Stromschiene (6) mit elektrischer Spannung betreibbar ist, und
- wobei zumindest zwei der Sektionen (1) mittels einer jeweiligen Verbindung (5) mit einem jeweiligen Segment (8) verbunden sind,
wobei der jeweilige elektrische Leiter (3) der jeweiligen Sektion (1) derart mit einer jeweiligen Segment-Stromschiene elektrisch verbunden ist, dass die elektrischen Leiter (3) des jeweiligen Segmentes (8) mittels einer geeigneten Beaufschlagung der jeweiligen Segment-Stromschiene mit elektrischer Spannung betreibbar sind, und
wobei die jeweilige Sektions-Stromschiene (6) mit der jeweiligen Segment-Stromschiene verbunden ist.

6. Aktivteil nach Anspruch 5,
wobei die zumindest zwei elektrischen Leiter (3) jeder Sektion (1) derart ausgestaltet sind, dass bei einer geeigneten Beaufschlagung des jeweiligen elektrischen Leiters (3) mit elektrischer Spannung zumindest zwei, vorzugsweise drei, Magnetpole (10) gebildet werden.

7. Aktivteil nach einem der Ansprüche 5 oder 6, wobei die jeweiligen elektrischen Leiter als Formspule ausgebildet sind und wobei zumindest einer der elektrischen Leiter (3) in radialer Richtung nach außen gekröpft ist und/oder zumindest einer der elektrischen Leiter (3) in radialer Richtung nach innen gekröpft ist.

8. Elektrische Maschine für einen Mühlenantrieb oder für eine Windkraftanlage mit zumindest einem ringsegmentförmigen Aktivteil nach einem der Ansprüche 5 bis 7.

9. Mühle oder Windkraftanlage mit einer elektrischen Maschine nach Anspruch 8.

10. Serviceverfahren für eine elektrische Maschine nach Anspruch 8 oder eine Mühle oder Windkraftanlage nach Anspruch 9 mit den Verfahrensschritten:
- Bereithalten zumindest einer ringsegmentförmigen Sektion (12) zusätzlich zu den ringsegmentförmigen Sektionen (1) der elektrischen Maschine in der Umgebung des Betriebsortes der elektrischen Maschine,
wobei die zumindest eine, zusätzlich bereitgehaltene Sektion (12) im Wesentlichen baugleich mit den ringsegmentförmigen Sektionen (1) der elektrischen Maschine ist,
falls eine der ringsegmentförmigen Sektionen (1) der elektrischen Maschine einen Defekt aufweist:
- Ausbauen der defekten Sektion (1) aus der elektrischen Maschine und
- Einbauen der zumindest einen, zusätzlich bereitgehaltenen Sektion (12) in die elektrische Maschine, wobei die jeweiligen elektrischen Leiter als Formspule ausgebildet sind.

## Claims

1. Method for producing an annular active part of an electric machine for a mill drive or for a wind power plant, wherein the active part has ring-segment-shaped sections (1) comprising grooves (2) for receiving electric conductors (3), comprising the method steps:
- forming sections (1) comprising the grooves (2),
- providing at least two, preferably three, galvanically separated electric conductors (3) in each case, wherein each electric conductor (3) is designed such that it can be arranged in at least two different grooves (2) of the respective section (1), running in opposite directions,
- insulating the respective electric conductor (3) by means of a respective electrically insulating insulation layer (4),
- impregnating the respective insulation layer (4) of the respective electric conductor (3) with an impregnant,
- inserting the respective insulated and impregnated electric conductor (3) into the at least two different grooves (2) of the respective section (1),
- electrically connecting the respective electric conductor (3) of the respective section (1) to a respective section conductor rail (6) before the transportation of the respective section (1), in such a way that the respective section (1) can be operated by suitably applying an electric voltage to the respective section conductor rail (6),
- transporting the respective section (1), including the respective electric conductors (3) inserted therein, to an assembly location and/or operating location of the electric machine,
- assembling the annular active part by joining at least two of the sections (2) with the aid of at least one respective connection (5),
- wherein the annular active part has at least two, preferably four, ring-segment-shaped segments (8), these functioning as a type of supporting framework and all being mounted on bases (14),
wherein at least two of the sections (1) are connected to a respective segment (8) by means of a respective connection (5) during the assembly of the active part,
wherein the respective electric conductor (3) of the respective section (1) is electrically connected to a respective segment conductor rail during the assembly of the active part, in such a way that the electric conductors (3) of the respective segment (8) can be operated by suitably applying an electric voltage to the respective segment conductor rail, and
wherein the respective section conductor rail (6) is connected to the respective segment conductor rail during the assembly of the active part.

2. Method according to claim 1,
wherein the respective segment conductor rail is directly connected to the respective connection point of the electric machine during the assembly.

3. Method according to one of the preceding claims,
wherein the respective electric conductors (3) of at least two different segments (8) are connected together via the respective section conductor rail (6) or via the respective segment conductor rail during the assembly of the active part, wherein the respective section conductor rail (6) or the respective segment conductor rail is connected to the respective connection point of the electric machine during the assembly.

4. Method according to one of the preceding claims, wherein the respective electric conductor is designed as a preformed coil and wherein at least one of the electric conductors (3) is cranked outwards in a radial direction and/or at least one of the electric conductors (3) is cranked inwards in a radial direction.

5. Annular active part of an electric machine for a mill drive or for a wind power plant, wherein the active part has ring-segment-shaped sections (1) and at least two, preferably four, ring-segment-shaped segments (8), these functioning as a type of supporting framework and all being mounted on bases (14), and wherein each section (1) has:
- grooves (2) for receiving electric conductors (3),
- at least two, preferably three, galvanically separated electric conductors (3),
- a respective electrically insulating insulation layer (4) which electrically insulates the respective electric conductor (3),
- a respective section conductor rail (6),
wherein the respective insulation layer (4) of the respective electric conductor (3) is impregnated with an impregnant,
the respective insulated and impregnated electric conductor (3) is arranged in at least two different grooves (2) of the respective section (1), running in opposite directions,
the respective section conductor rail (6) is electrically connected to the respective electric conductor (3) of the respective section (1), in such a way that the respective section (1) can be operated by suitably applying an electric voltage to the respective section conductor rail (6), and
- wherein at least two of the sections (1) are connected to a respective segment (8) by means of a respective connection (5),
wherein the respective electric conductor (3) of the respective section (1) is electrically connected to a respective segment conductor rail in such a way that the electric conductors (3) of the respective segment (8) can be operated by suitably applying an electric voltage to the respective segment conductor rail, and
wherein the respective section conductor rail (6) is connected to the respective segment conductor rail.

6. Active part according to claim 5,
wherein the at least two electric conductors (3) of each section (1) are embodied in such a way that at least two, preferably three, magnetic poles (10) are formed when an electric voltage is suitably applied to the respective electric conductor (3).

7. Active part according to one of claims 5 or 6, wherein the respective electric conductors are designed as preformed coils and wherein at least one of the electric conductors (3) is cranked outwards in a radial direction and/or at least one of the electric conductors (3) is cranked inwards in a radial direction.

8. Electric machine for a mill drive or a wind power plant, comprising at least one ring-segment-shaped active part according to one of claims 5 to 7.

9. Mill or wind power plant comprising an electric machine according to claim 8.

10. Service method for an electric machine according to claim 8 or a mill or wind power plant according to claim 9 with the method steps:
- providing at least one ring-segment-shaped section (12), in addition to the ring-segment-shaped sections (1) of the electric machine, in the vicinity of the operating location of the electric machine,
wherein the at least one additionally provided section (12) is essentially structurally identical to the ring-segment-shaped sections (1) of the electric machine,
and if one of the ring-segment-shaped sections (1) of the electric machine exhibits a fault:
- removing the faulty section (1) from the electric machine, and
- installing the at least one additionally provided section (12) into the electric machine, wherein the respective electric conductors are designed as preformed coils.

## Revendications

1. Procédé de fabrication d'une partie active annulaire d'une machine électrique pour un entraînement de broyeur ou pour une centrale éolienne, la partie active ayant des sections (1) en forme de segment d'anneau ayant des encoches (2) de réception de conducteurs (3) électriques,
comprenant les stades de procédé :
- formation de sections (1) ayant les encoches (2),
- conformation de respectivement au moins deux, de préférence trois, conducteurs (3) électriques séparés les uns des autres galvaniquement, le conducteur (3) électrique étant conformé de manière à pouvoir être mis, en s'étendant dans au moins deux encoches (2) différentes de la section (1) respective dans des sens contraires,
- isolation du conducteur (3) électrique respectif par une couche (4) isolante électriquement respective,
- imprégnation de la couche (4) isolante respective du conducteur (3) électrique respectif par un agent d'imprégnation,
- introduction du conducteur (3) électrique respectif isolé et imprégné dans les au moins deux encoches (2) différentes de la section (1) respective,
- liaison électrique du conducteur (3) électrique respectif de la section (1) respective à une barre (6) de courant de section respective avant le transport de la section (1) respective, de manière à pouvoir faire fonctionner la section (1) respective au moyen d'une alimentation appropriée de la barre (6) de courant de section respective en une tension électrique,
- transport de la section (1) respective, ensemble avec les conducteurs (3) électriques respectifs qui y sont mis, à un emplacement de montage et/ou de fonctionnement de la machine électrique,
- assemblage de la partie active annulaire par jonction d'au moins deux des sections (1) à l'aide d'au moins une liaison (5) respective,
- dans lequel la partie active annulaire a au moins deux, de préférence quatre, segments (8) en forme de segment d'anneau, qui servent comme une sorte d'ossature de support et qui sont montés dans l'ensemble sur des fondations (14),
dans lequel au moins deux des sections (1) sont, pendant l'assemblage de la partie active, reliées à un segment (8) respectif au moyen d'une liaison (5) respective,
dans lequel le conducteur (3) électrique respectif de la section (1) respective est relié électriquement à une barre de courant de segment respective, de manière à ce que le conducteur (3) électrique du segment (8) respectif puisse fonctionner au moyen d'une alimentation appropriée de la barre de courant de segment respective en une tension électrique, et dans lequel on relie la barre (6) de courant de section respective à la barre de courant de segment respective, pendant l'assemblage de la partie active.

2. Procédé suivant la revendication 1,
dans lequel on relie la barre de courant de segment respective directement au point de connexion respectif de la machine électrique, pendant l'assemblage.

3. Procédé suivant l'une des revendications précédentes,
dans lequel on relie les uns aux autres les conducteurs (3) électriques respectifs d'au moins deux segments (8) différents pendant l'assemblage de la partie active par les barres (6) de courant de section respectives ou par les barres de courant de segment respectives,
dans lequel on relie les barres (6) de courant de section respectives ou les barres de courant de segment respectives pendant l'assemblage au point de connexion respectif de la machine électrique.

4. Procédé suivant l'une des revendications précédentes, dans lequel les conducteurs électriques respectifs sont constitués sous la forme de bobine formée sur gabarit et dans lequel au moins l'un des conducteurs (3) électriques est coudé vers l'extérieur dans la direction radiale et/ou au moins l'un des conducteurs (3) électriques est coudé vers l'intérieur dans la direction radiale.

5. Partie active annulaire d'une machine électrique pour un entraînement de broyeur ou pour une centrale éolienne, dans laquelle la partie active a des sections (1) en forme de segment d'anneau et au moins deux, de préférence quatre, segments (8) en forme de segment d'anneau, qui servent comme une sorte d'ossature de support et sont montés dans l'ensemble sur des fondations (14),
et dans laquelle chaque section (1) a :
- des encoches (2) de réception de conducteurs (3) électriques,
- au moins deux, de préférence trois, conducteurs (3) électriques séparés galvaniquement les uns des autres,
- une couche (4) isolante électriquement respective, qui isole électriquement le conducteur (3) électrique respectif,
- une barre (6) de courant de section respective,
dans laquelle la couche (4) isolante respective du conducteur (3) électrique respectif est imprégnée d'un agent d'imprégnation,
le conducteur (3) électrique respectif isolé et imprégné est disposé, en s'étendant dans au moins deux encoches (2) différentes de la section (1) respective dans des sens contraires,
la barre (6) de courant de section respective est reliée électriquement au conducteur (3) électrique respectif de la section (1) respective, de manière à pouvoir faire fonctionner la section (1) respective au moyen d'une alimentation appropriée de la barre (6) de courant de section respective en une tension électrique, et
- dans laquelle au moins deux des sections (1) sont reliées à un segment (8) respectif au moyen d'une liaison (5) respective,
dans laquelle le conducteur (3) électrique respectif de la section (1) respective est relié électriquement à une barre de courant de segment respective, de manière à ce que le conducteur (3) électrique du segment (8) respectif puisse fonctionner au moyen d'une alimentation appropriée de la barre de courant de segment respective en une tension électrique, et dans laquelle la barre (6) de courant de section respective est reliée à la barre de courant de segment respective.

6. Partie active suivant la revendication 5,
dans laquelle les au moins deux conducteurs (3) électriques de chaque section (1) sont conformés de manière à former, pour une alimentation appropriée du conducteur (3) électrique respectif en une tension électrique, au moins deux, de préférence trois, pôles (10) magnétiques.

7. Partie active suivant l'une des revendications 5 ou 6, dans laquelle les conducteurs électriques respectifs sont constitués sous la forme de bobines formées sur gabarit et dans laquelle au moins l'un des conducteurs (3) électriques est coudé vers l'extérieur dans la direction radiale et/ou au moins l'un des conducteurs (3) électriques est coudé vers l'intérieur dans la direction radiale.

8. Machine électrique d'un entraînement de broyeur ou d'une centrale éolienne, comprenant au moins une partie active en forme de segment d'anneau suivant l'une des revendications 5 à 7.

9. Broyeur ou centrale éolienne ayant une machine électrique suivant la revendication 8.

10. Procédé de service d'une machine électrique suivant la revendication 8 ou d'un broyeur ou d'une centrale éolienne suivant la revendication 9, comprenant les stades de procédé suivants :
- on se procure au moins une section (12) en forme de segment d'anneau supplémentairement aux sections (1) en forme de segment d'anneau de la machine électrique aux alentours de l'emplacement de fonctionnement de la machine électrique,
dans lequel la au moins une section (12) procurée supplémentairement est sensiblement de même construction que les sections (1) en forme de segment d'anneau de la machine électrique,
si l'une des sections (1) en forme de segment d'anneau de la machine électrique a un défaut :
- on démonte la section (1) défectueuse de la machine électrique et
- on monte la au moins une section (12) procurée supplémentairement dans la machine électrique, les conducteurs électriques respectifs étant constitués sous la forme de bobines formées sur gabarit.
